# EUROPEAN PATENT SPECIFICATION

(11) **EP 0 438 985 B1**
(45) Date of publication and mention of the grant of the patent: **04.08.1993**
(21) Application number: 90830571.7
(22) Date of filing: 07.12.1990
(51) Int. Cl.: A01M 1/22

(54) **A cleaning device for electric insecticide apparatus**
Vorrichtung zur Reinigung eines elektrischen Insektenvernichtungsapparates
Dispositif de nettoyage pour un dispositif à tuer les insectes

(30) Priority: 26.01.1990 IT 2051090 U; 22.06.1990 IT 2139590 U
(43) Date of publication of application: 31.07.1991
(73) Proprietor: MO-EL S.r.l., I-42027 Montecchio Emilia (RE) (IT)
(72) Inventor: Bertani, Carlo, I-43022 Montechiarugolo (PR) (IT)
(74) Representative: Righetti, Giuseppe

(56) References cited:
- US-A- 2 154 418
- US-A- 3 491 478
- US-A- 3 935 662

## Description

The present invention relates to a cleaning device for an electric insecticide apparatus comprising in combination: a support housing consisting of a base portion, a top portion disposed above the base portion and a protection element perimetrically extending over the area included between the base portion and top portion; at least one lamp of elongated cylindrical configuration engaged, at the ends threof, to the support housing; at least one discharge member engaged to the support housing and consisting of a plurality of electrified small bars substantially distributed about said lamp and provided with one free end.

It is known that electric insecticide apparatus essentially consist of a support housing mainly of reticulated configuration inside which an appropriate lamp of elongated substantially cylindrical configuration is housed, the glow of which appears to be a strong insect attraction.

Located close to the lamp is a discharge member comprising a number of small metal bars disposed close to one another and connected, according to an alternate order, to the poles of an electric supply circuit. Such bars are capable of producing electrical discharges in order to give an electric shock to the insects which, attracted by the light issuing from the lamp, come close thereto and are therefore led to touch the small bars. At the moment the insect touches two bars disposed in side by side relation, in fact, it causes the closure of an electric circuit and therefore receives an electric shock by the electric discharge thus produced.

Apparatus of the above described kind are disclosed in US-A-3 935 662, which discloses the preamble of claims 1 and 2.

At the present state of the art some drawbacks have been found due to the prolonged use of the apparatus.

It may happen that an insect after having undergone an electrical discharge, remains attached to the small bars of the discharge member or, due to the dirt present in the air or carried by the insects, deposits are created which reduce the free space between the bars themselves.

As a result, the operation of the apparatus, and therefore its effectiveness, is reduced until the insect body or dirt deposits are removed.

It may also happen that killed insects and/or deposits occupying the space between two contiguous small bars give rise to a permanent electric contact between said bars.

An attempt tending to overcome the above mentioned disadvantage is described in detail in US-A-2 154 418.

In this apparatus provision is made for a certain number of cleaning sweeps consisting of wooden shafts pivoted at their extremities in pivoted brackets. A series of rods project from each shaft and extend intermediate the wire or electrified small bars of the discharge member. Said rods are of a length to allow them to sweep the entire width of the frame in which they are positioned. Movement is imparted to said shafts so the rods sweep that surface part of wire on which they are sliding along.

It is however apparent that not the whole outer surface is conveniently cleaned because the rods are adapted to remove the biggest bodies alone, on a very narrow outer-surface band of the wires.

Under this situation the electric operating circuit remains closed and as a result the practical operation of the apparatus is jeopardized as far as the insects and/or dirt deposits are removed.

In addition to the above it is to be pointed out that the lamp too is inevitably made opaque by impurities of different kinds present in the air, which results in a reduction in the light emission.

It will be therefore apparent that, in order to achieve a good operation of the apparatus as a whole, it is necessary to carry out periodical cleanings of the same.

At the present state of the art, in order to carry out the cleaning it is necessary to stop the apparatus operation since some parts thereof need to be dismantled. In fact, at the moment of cleaning the lamp must be disconnected and withdrawn from the housing.

Otherwise, in order to have access to the discharge member the support housing should be opened and the cleaning carried out in an empirical manner. In greater detail, the insects and/or impurities laid on the bars could be eliminated by water jets or by a mechanical scraping action with the use of brushes.

Due to the above described problems, the cleaning operation always requires an important waste of time, some still and experience by the person carrying out the cleaning and in addition some frequency.

On the other hand it is not even thinkable of interrupting the operation of the apparatus very often for carrying out frequent cleaning operations.

Consequently the object of the present invention is substantially to solve the problems of the known art by providing a device capable of performing the cleaning of the small bars and/or lamp of an insecticide apparatus in a simple, easy and quick manner, each time it is necessary, without being obliged to dismantle the apparatus itself.

The foregoing and further objects that will become more apparent in the course of the present description are substantially attained by a device to clean electric insecticide apparatus, characterized in that it further comprises at least one annular cleaning element provided with a number of working areas each being slidably mounted on, and in contact with, the outer surface of the small bar in order to eliminate the deposits that have adhered to the small bar itself through the axial sliding of said cleaning element along said small bar; at least one driving bar disposed parallelly to the cleaning element and connected thereto by at least one union rod slidably movable through the support housing.

Advantageously the device is further characterized in that it comprises: at least one annular slide element engaged to the lamp and having a work portion which is slidably mounted on, and in contact with, the outer lamp surface in order to eliminate the impurities present thereon through the axial shifting of the annular slide element along the lamp; at least one drive bar slidably guided through the support housing and having one end fastened to the annular slide element; and at least one operating handle fastened to the second end of the drive bar and manually operable from the outside of the support housing in order to cause the annular slide element to move along said lamp.

Further features and advantages will become more apparent from the detailed description of a device to clean electric insecticide apparatus in accordance with the invention, given hereinafter by way of non-limiting example with reference to the accompanying drawings, in which:
- Fig. 1 is a fragmentary perspective view of an electric insecticide apparatus incorporating the device of the invention;
- Fig. 2 is a fragmentary sectional view of the device in accordance with the invention taken along line II-II in Fig. 1;
- Fig. 3 is a sectional top view to an enlarged scale of an annular slide element being part of the device in question.

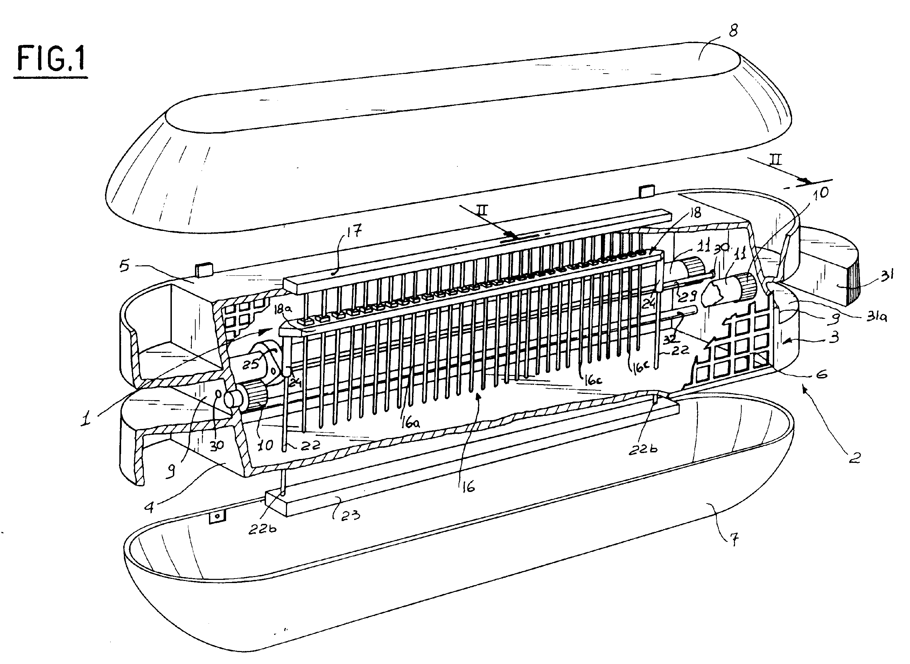

Referring to the drawings and in particular to Fig. 1, a cleaning device for electric insecticide apparatus in accordance with the invention has been generally identified by reference numeral 1.
The device 1 is introduced into an electric insecticide apparatus 2 that, in known manner, comprises a support housing 3 substantially consisting of a base portion 4, a top portion 5 disposed above the base portion 4 and a protection element 6 of reticulated configuration, perimetrically extending over the area included between the base portion 4 and top portion 5. Engaged to the base portion 4 and top portion 5 is a bottom element 7 and a covering element 8 respectively.

Inside the support housing 3 at the opposite ends of the same and at a height substantially intermediate between the base portion 4 and top portion 5 there are two support regions 9 housing respective lamp-holders 10. Conventionally connected to the lamp-holders 10 is a lamp 11 of elongated cylindrical configuration.

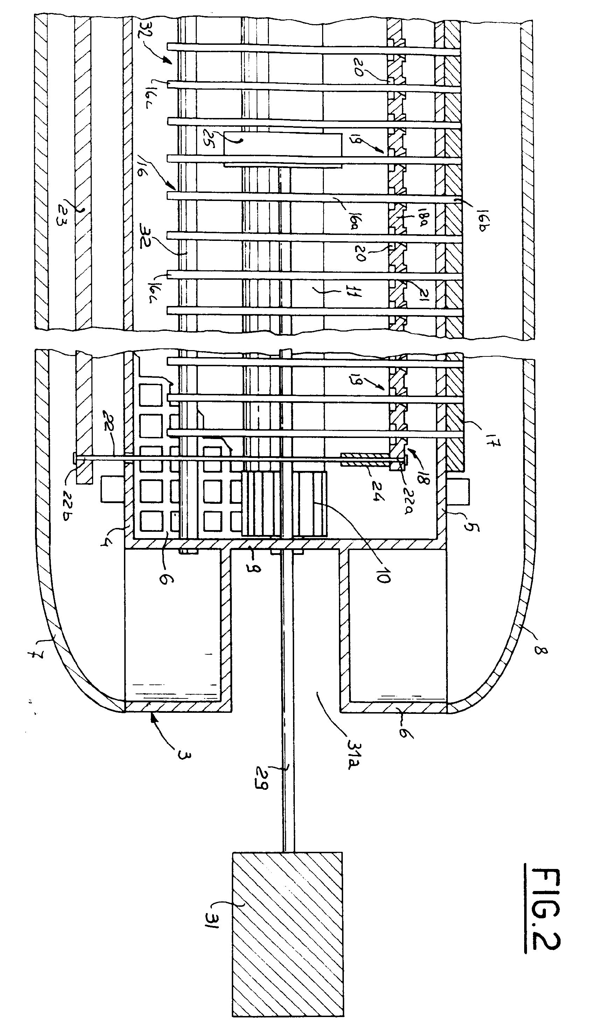

Apparatus 2 comprises a discharge member 16 that in known manner exhibits a number of electrified small metal bars 16a substantially distributed about the lamp 11. The small bars 16a are fastened, at one end 16b thereof, to the top portion 5 of the support housing 3 by an engagement element 17 and are free at the other end 16c thereof being unconnected to each other (Fig. 2).

In addition the electrified small bars 16a are conventionally supplied through an electric circuit, a capacitor not shown as known and conventional being interposed therebetween, for producing electrical discharges that will give an electric shock to the insects passing through two contiguous small bars 16a.

In accordance with the present invention, the cleaning device comprises at least a cleaning element 18 of insulating material slidably engaged to the small bars 16a and provided with a number of operating areas 19, each acting by contact on the outer surface of the small bar 16a in order to eliminate the deposits that have adhered to the bar itself by the axial sliding of the element 18 along the bar 16a.

Preferably, the cleaning element 18 is substantially comprised of an elongated body 18a provided with a plurality of openings 20, at each of them being formed the operating area 19. Fig. 2 emphasizes the inclined profile of the operating area 19 forming a restriction in the opening 20 in order to define a scraping portion 21 acting in abutment on the small bar 16a.

Advantageously, connected to the element 18 is at least a union rod 22 slidably movable through the support housing 3.

In the embodiment shown the device 1 comprises two union rods 22 disposed parallelly to the small bars 16a and at opposite positions thereto. Said rods 22 are fastened at one end 22a to the element 18 and at the other end 22b to at least a driving bar 23 disposed parallelly to the cleaning element 18 and externally to the support housing 3 on the side of the base portion 4.

In greater detail, the union rods 22 are advantageously provided with a locator 24 arranged such as to define a maximum moving away condition of the driving bar 23 from the top portion 5 and consequently prevent the element 18 from slipping off the free ends 16c of the small bars 16a.

The driving bar 23 is also arranged in such a manner that it acts in abutment against the base portion 4 in order to determine a rest condition of the device 1 and be held within the bottom element 7.

As shown in Fig. 2 the driving bar 23, of substantially parallelepiped configuration, is manually operated from the outside of the support housing 3 and in particular on the side of the base portion 4. In this way it is possible to carry out the axial movement of the element 18 along the small bars 16a once the bottom element 7 has been moved apart, so as to scrape away the impurities present on bars 16a and drop them onto the base portion 4, said impurities being then brought to the outside of the support housing 3.

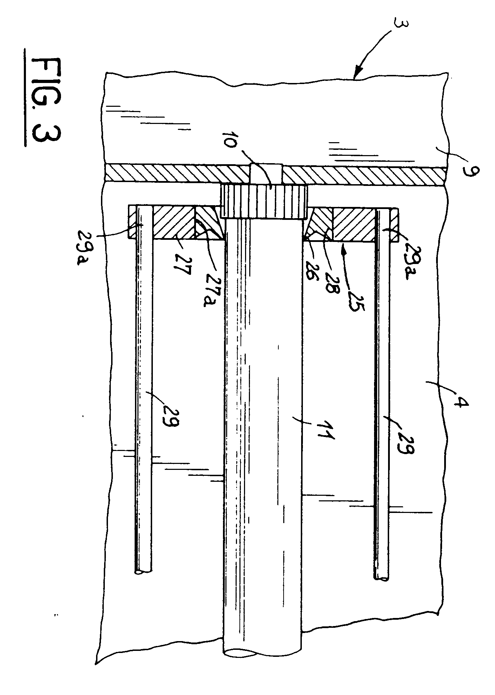

In accordance with the present invention, the cleaning device 1 further comprises at least an annular slide element 25 slidably engaged to the lamp 11 and having a work surface 26 (Fig. 3) acting by contact on the outer surface of the lamp itself so as to cause the removal of the impurities present thereon due to an axial shifting of the annular element along said lamp. Preferably, as clearly shown in Fig. 3, the annular slide element 25 is essentially comprised of a small support base 27 provided with at least an opening 27a to which a ring made of elastically deformable and heat-resistant material is fastened and inside which said work portion 26 is formed.

As can be viewed from Fig. 3, the work portion 26, of one piece construction with the ring 28, has a wedge-shaped section directed obliquely to the outer surface of lamp 11 and is fitted over the lamp under elastic pre-tensioning conditions.

Connected to the annular slide bar 25 is one or more drive bars 29, each slidably guided through the support housing 3 and fastened, at one end 29a thereof, to the small attachment base 27 of the annular element itself. In greater detail, in the embodiment shown two drive bars 29 are provided and they are disposed at diametrically opposite positions relative to the lamp 11, extend parallelly to the lamp itself and slidably engage into respective holes 30 formed in the support housing 3.

Secured to the drive bars 29 is at least an operating handle 31 which is manually operable from the outside of the support housing 3 to make the annular slide element 25 move along the lamp 11. In greater detail, the operating handle 31 can preferably be accommodated, when in its rest condition shown in Fig. 2, within a seat 31a provided in the bottom element 7.

The device 1 further comprises an attraction member 32 located inside the support housing 3 and designed to attract insects by means of chemical substances reproducing insect hormones. In the embodiment herein described, the attraction member 32 consists of a small slab detachably engaged to the support housing 3 and impregnated with the above substances.

Advantageously the slab can compensate for the reduction in the attractive capability of the lamp 11 when, before being cleaned, it is covered with dirty matter represented by killed insects or environment impurities.

Operation of the cleaning device according to the invention described above mainly as regards structure, is as follows.

When after a prolonged use the apparatus 2 need to be cleaned, for the cleaning of lamp 11 it is sufficient to use the operating handle 31.

In fact it is only necessary to make the annular element 25 slide to and fro along the lamp 11 until all impurities have been removed therefrom. The cleaning of the small bars 16a only involves a manual action on the driving bar 23, making the cleaning element 18 slide along the bars themselves with a reciprocating motion as many times as they are sufficient for accomplishing the complete removal of the impurities.

The present invention attains the intended purposes.

In fact, by virtue of the device in question, the operating efficiency of the apparatus can be maintained substantially constant with a simple device of quick use and low price.

In addition the cleaning of the small bars and the lamp or lamps of the electric insecticide apparatus can be carried out without the apparatus being dismantled and without being obliged to stop the operation thereof, since the device is electrically insulated.

Advantageously, the device also has a higher number of service hours by year as compared with the apparatus of the known art.

Finally, in spite of the presence of the inventive device, the apparatus still exhibits a great structural simplicity.

Obviously, minor modifications and variations in detail of construction and arrangement of many parts may be made without departing from the scope of the invention as set forth in the appended claims.

## Claims

1. A cleaning device for an electric insecticide apparatus comprising in combination::
- a support housing (3) consisting of a base portion (4), a top portion (5) disposed above the base portion (4) and a protection element (6) perimetrically extending over the area included between the base portion (4) and top portion (5);
- at least one lamp (11) of elongated cylindrical configuration engaged, at the ends thereof, to the support housing (3);
- at least one discharge member (16) engaged to the support housing (3) and consisting of a plurality of electrified small bars (16a) substantially distributed about said lamp (11) and provided with one free end (16c);
characterized in that it further comprises:
- at least one annular cleaning element (18) provided with a number of working areas (19) each being slidably mounted on, and in contact with, the outer surface of a small bar (16a) in order to eliminate the deposits that have adhered to the small bar itself through the axial sliding of said element (18) along said small bar (16a);
- at least one driving bar (23) disposed parallelly to the cleaning element (18) and connected thereto by at least one union rod (22) slidably movable through the support housing (3).

2. A cleaning device for an electric insecticide apparatus comprising in combination:
- a support housing (3) consisting of a base portion (4), a top portion (5) disposed shove the base portion (4) and a protection element (6) perimetrically extending over the area included between the base portion (4) and top portion (5);
- at least one lamp (11) of elongated cylindrical configuration engaged, at the ends thereof, to the support housing (3);
- at least one discharge member (16) engaged to the support housing (3) and consisting of a plurality of electrified small bars (16a) substantially distributed about said lamp (11) and provided with one free end (16c);
characterized in that it comprises:
- at least one annular slide element (25) engaged to the lamp (11) and having a work portion (26) which is slidably mounted on, and in contact with, the outer lamp surface in order to eliminate the impurities present thereon through the axial shifting of the annular slide element along the lamp;
- at least one drive bar (29) slidably guided through the support housing (3) and having one end fastened to the annular slide element (25); and
- at least one operating handle (31) fastened to the second end of the drive bar (29) and manually operable from the outside of the support housing (3) in order to cause the annular slide element (25) to move along said lamp (11).

3. A cleaning device according to claim 1, characterized in that said cleaning element (18) substantially consists of an elongated body (18a) provided with a number of openings (20) at each of which said working area (19) is formed.

4. A cleaning device according to claim 1, characterized in that each working area (19) has a substantially wedge-shaped profile in sectional view which defines a scraping portion (21) acting against the small bar (16a).

5. A cleaning device according to claim 1, characterized in that said driving bar (23) of substantially parallelepiped form, is located at the outside of the support housing (3) and is designed to operate from a rest condition of the device in which the bar is in abutment against the base portion (4) to a maximum moving away condition from the top portion (5) in which the bar (23) operates the axial movement of the cleaning element (18) along the small bars (16a).

6. A cleaning device according to claim 1, characterized in that it comprises two union rods (22) disposed parallelly to the small bars (16a) and at opposite positions relative to the small bars themselves and having one end (22a) fastened to the cleaning element (18) and the other end (22b) secured to the driving bar (23).

7. A cleaning device according to claim 1, characterized in that said union rods (22) are respectively provided with a locator (24) designed to determine the maximum moving away condition of the driving bar (23) from the top portion (5).

8. A cleaning device according to claim 2, characterized in that said annular slide element (25) comprises a small support base (27) to which one end (29a) of said at least one drive bar (29) is connected and exhibiting an opening (27a) to which a ring made of elastically deformable material and defining said work portion (26) is fastened.

9. A cleaning device according to claim 2, characterized in that said work portion (26) has a wedge-shaped section disposed obliquely to the lamp (11) surface.

10. A cleaning device according to claim 9, characterized in that the work portion (26) is fitted over said lamp (11) under elastic pre-tensioning conditions.

11. A cleaning device according to claim 2, characterized in that it comprises two drive bars (29) located at diametrically opposite positions from the lamp (11) and extending parallelly thereto.

12. A cleaning device according to claim 2, characterized in that said operating handle (31) is adapted to be inserted into a respective seat (31a) exhibited by the support housing (3) and carrying said lamp (11).

## Patentansprüche

1. Vorrichtung zur Reinigung eines elektrischen Insektenvernichtungsapparates, bestehend aus der Kombination folgender Merkmale:
- ein Aufnahme- und Lagergehäuse (3), das aus einem Basisteil (4), einem oberhalb des Basisteils (4) angeordneten Oberteil (5) und aus einem Schutzelement (6) besteht, das sich um die zwischen dem Basisteil (4) und dem Oberteil (5) liegenden Fläche umlaufend erstreckt;
- mindestens eine zylinderförmig ausgebildete, sich längserstreckende Lampe (11), die an ihren Enden am Aufnahme- und Lagergehäuse (3) in Eingrif steht;
- mindestens ein Entladungselement (16), das am Aufnahme- und Lagergehäuse (3) in Eingriff steht und aus einer Anzahl von im wesentlichen um die Lampe (11) verteilten und mit einem freien Ende (16c) versehenen, stromleitenden Stäbchen (16a) besteht;
dadurch gekennzeichnet, daß sie überdies:
- mindestens ein ringförmiges Reinigungselement (18), das mit einer Anzahl von Arbeitsbereichen (19) versehen ist, von denen jeder an der Außenfläche eines Stäbchens (16) gleitbar und in Berührung mit diesem angebracht ist, um die Ablagerungen, die am Stab selbst anhaften, durch die axiale Gleitbewegung des Reinigungselementes (18) längs des Stäbchens (16a) zu beseitigen;
- mindestens einen Betätigungsstab (23), der parallel zum Reinigungselement (18) angeordnet ist und mit diesem durch mindestens eine bewegliche Verbindungsstange (22) gleitbar über das Aufnahme- und Lagergehäuse verbunden ist,
umfaßt.

2. Vorrichtung zur Reinigung eines elektrischen Insektenvernichtungsapparates, bestehend aus der Kombination folgender Merkmale:
- ein Aufnahme- und Lagergehäuse (3), das aus einem Basisteil (4), einem oberhalb des Basisteils (4) angeordneten Oberteil (5) und aus einem Schutzelement (6) besteht, das sich um die zwischen dem Basisteil (4) und dem Oberteil (5) liegenden Fläche umlaufend erstreckt;
- mindestens eine zylinderförmig ausgebildete, sich längs erstreckende Lampe (11), die an ihren Enden am Aufnahme- und Lagergehäuse (3) in Eingriff steht;
- mindestens ein Entladungselement (16), das am Aufnahme- und Lagergehäuse (3) in Eingriff steht und aus einer Anzahl von stromleitenden Stäbchen (16a) besteht, die im wesentlichen um der Lampe (11) herum verteilt und mit einem freien Ende (16c) versehen sind;
dadurch gekennzeichnet, daß sie:
- mindestens ein ringförmiges Gleitelement (25), das an der Lampe (11) angreift und einen Arbeitsabschnitt (26) aufweist, der an der Außenfläche der Lampe und in Berührung mit dieser angebracht ist, um die dort vorliegenden Unreinigkeiten durch die axiale Verschiebung des ringförmigen Gleitelementes längs der Lampe zu beseitigen;
- mindestens einen Betätigungsstab (29), der durch das Aufnahme- und Lagergehäuse (3) gleitbar geführt ist und ein am ringförmigen Gleitelement (25) befestigtes Ende aufweist; und
- mindestens einen Betätigungsgriff (31), der am zweiten Ende des Betätigungsstabes (29) befestigt und manuell außerhalb des Aufnahme- und Lagergehäuses (3) betätigbar ist, um das ringförmige Gleitelement (25) längs der Lampe (11) zu bewegen.

3. Vorrichtung nach Anspruch 1, dadurch gekennzeichnet, daß das Reinigungselement (18) im wesentlichen aus einem länglichen Körper (18a) besteht, der mit einer Anzahl von Ausnehmungen (20) versehen ist, in derem Bereich einer jeden derselben der Arbeitsabschnitt (19) gebildet ist.

4. Vorrichtung nach Anspruch 1, dadurch gekennzeichnet, daß jeder Arbeitsbereich (19) im Querschnitt ein im wesentlichen keilförmiges profil aufweist, das einen gegen das Stäbchen (16a) wirkenden Abstreifteil (21) festlegt.

5. Vorrichtung nach Anspruch 1, dadurch gekennzeichnet, daß der im wesentlichen kastenförmig ausgebildete Betätigungsstab (23) außerhalb des Aufnahme- und Lagergehäuses (3) angeordnet ist und von einer Ruhestellung der Vorrichtung, in der der Stab gegen den Basisteil (4) anschlägt, in eine Stellung des höchsten Abstandes vom Oberteil (5) wirkt, in der der Stab (23) die axiale Bewegung des Reinigungselementes (18) längs der Stäbe (16a) steuert.

6. Vorrichtung nach Anspruch 1, dadurch gekennzeichnet, daß sie zwei Verbindungsstangen (22) umfaßt, die parallel zu den Stäbcheen (16a) und in gegenüber den Stäbchen selbst entgegengesetzten Stellungen angeordnet sind und ein am Reinigungselement (18) befestigtes Ende (22a) und das andere am Betätigungsstab (23) befestigtes Ende (22b) aufweist.

7. Vorrichtung nach Anspruch 1, dadurch gekennzeichnet, daß die Verbindungsstangen (22) jeweils mit einem Anschlag (24) versehen sind, der dazu bestimmt ist, die Stellung des höchsten Abstandes des Betätigungsstabes (23) vom Oberteil (5) festzulegen.

8. Vorrichtung nach Anspruch 2, dadurch gekennzeichnet, daß das ringförmige Gleitelement (25) eine kleine Lagerunterlage (27) umfaßt, mit der ein Ende (29a) mindestens eines Betätigungsstabes (29) verbunden ist, und eine Ausnehmung (27a) aufweist, an der ein aus einem elastisch verformbaren Material bestehender und den Arbeitsschnitt festlegender Ring befestigt ist.

9. Vorrichtung nach Anspruch 2, dadurch gekennzeichnet, daß der Arbeitsabschnitt (26) einen keilförmigen, schräg zur Oberfläche der Lampe (11) angeordneten Querschnitt aufweist.

10. Vorrichtung nach Anspruch 9, dadurch gekennzeichnet, daß der Arbeitsabschnitt (26) oberhalb der Lampe (11) elastisch vorgespannt eingeführt ist.

11. Vorrichtung nach Anspruch 2, dadurch gekennzeichnet, daß sie zwei Betätigungstäbe (29) umfaßt, die in zur Lampe (11) diametral entgegengesetzten Stellungen angeordnet sind und sich parallel zu derselben erstrecken.

12. Vorrichtung nach Anspruch 2, dadurch gekennzeichnet, daß der Betätigungsgriff (31) in eine jeweilige Aufnahme (31a) eingeführt werden kann, die im Aufnahme- und Lagergehäuse (3) vorgesehen ist und die Lampe (11) aufnimmt.

## Revendications

1. Dispositif de nettoyage pour un dispositif électrique à tuer las insectes comprenant en combinaison:
- une enceinte de support (3) composée d'une portion de base (4), une portion supérieure (5) disposée au-dessus de la portion de base (4) et un élément de protection (6) s'étendant sur le pourtour de la zone comprise entre la portion de base (4) et la portion supérieure (5);
- au moins une lampe (11) de configuration cylindrique allongée, engagée par ses extrémités à l'enceinte de support (3);
- au moins un élément de décharge (16) engagé à l'enceinte de support (3) et comportant une pluralité de barreaux électrifiés (16a) distribués sensiblement autour de ladite lampe (1) et pourvus d'une extrémité libre (16c);
caractérisé en ce qu'il comporta en outre:
- au moins un élément annulaire de nettoyage (18) pourvu d'une pluralité de zones de travail (19), chacune étant montée de manière coulissante sur la surface externe d'un barreau (16a) et étant en contact avec celui-ci, dans le but d'éliminer les dépôts qui se sont collés au barreau par le coulissement axial dudit élément le long du barreau (16a) lui-même;
- au moins une barre de commande (23) disposée parallèlement à l'élément de nettoyage (18) et reliée à ce dernier par au moins une tige de liaison (22) mobile par coulissement au travers de l'enceinte de support.

2. Dispositif de nettoyage pour un dispositif électrique à tuer les insectes comprenant en combinaison:
- une enceinte de support (3) composée d'une portion de base (4), une portion supérieure (5) disposée au-dessus de la portion de base (4) et un élément de protection (6) s'étendant sur le pourtour de la zone comprise entre la portion de base (4) et la portion supérieure (5);
- au moins une lampe (11) de configuration cylindrique allongée, engagée par ses extrémités à l'enceinte de support (3);
- au moins un élément de décharge (16) engagé à l'enceinte de support (3) et comportant une pluralité de barreaux électrifiés (16a) distribués sensiblement autour de ladite lampe (1) et pourvus d'une extrémité libre (16c);
caractérisé en ce qu'il comporte en outre:
- au moins un élément annulaire de coulissement (25) engagé à la lampe (11) et ayant une portion de travail (26) qui est montée à coulissement sur la surface extérieure de la lame et en contact avec cette dernière, dans le but d'éliminer les impuretés y présentes par le déplacement axial de l'élément annulaire de coulissement le long de la lampe;
- au moins une barre de manoeuvre (29) guidée de manière coulissante au travers de l'enceinte de support (3) et ayant une de ses extrémités fixée à l'élément annulaire de coulissement (25); et
- au moins une poignée de manoeuvre (31) fixée à la seconde extrémité de la barre de manoeuvre (29) et susceptible d'actionnement manuel de l'extérieur de l'enceinte de support (3) dans le but d'amener l'élément annulaire de coulissement à se déplacer le long de ladite lampe (11).

3. Dispositif de nettoyage selon la revendication 1, caractérisé en ce que ledit élément de nettoyage (18) comporte essentiellement un corps allongé (18a) pourvu d'une pluralité d'ouvertures (20), en correspondance de ces ouvertures étant formée ladite zone de travail (19).

4. Dispositif de nettoyage selon la revendication 1, caractérisé en ce que chaque zone de travail (19) vue en coupe a un profil sensiblement an forme de coin définissant une portion de raclage (21) qui agit contre le barreau (16a).

5. Dispositif de nettoyage selon la revendication 1, caractérisé en ce que ladite barre de commande (23), de forme sensiblement parallélépipédique, est située à l'exterieur de l'enceinte de support (3) et est destinée à opérer d'une condition de repos du dispositif dans laquelle la barre est en butée contre la portion de base (4) à une condition dans laquelle la barre a atteint son éloignement maximum de la portion supérieure (5) et effectue le mouvement axial de l'élément de nettoyage (18) le long des barreaux (16a).

6. Dispositif de nettoyage selon la revendication 1, caractérisé en ce qu'il comporte deux tiges de liaison (22) disposées parallèlement aux barreaux (16a) et à des emplacements opposés par rapport à ces mêmes barreaux, lesquelles ont une de leurs extrémités (22a) fixée à l'élément de nettoyage (18) et l'autre extrémité (22b) fixée à la barre de commande (23).

7. Dispositif de nettoyage selon la revendication 1, caractérisé en ce que lesdites tiges de liaison (22) sont respectivement pourvues d'un élément de butée (24) destiné à déterminer la condition d'éloignement maximum de la barre de commande (23) de la portion supérieure (5).

8. Dispositif de nettoyage selon la revendication 2, caractérisé en ce que ledit élément annulaire de coulissement (25) comporte une petite base de support (27) à laquelle est reliée l'une des extrémités (29a) de ladite au moins une barre de manoeuvre (29) et présentant une ouverture (27a) à laquelle est fixée une bague en matière élastiquement déformable et définissant ladite portion de travail (26).

9. Dispositif de nettoyage selon la revendication 2, caractérisé en ce que ladite portion de travail (26) a une section en forme de coin disposée obliquement par rapport à la surface de la lampe (11).

10. Dispositif de nettoyage selon la revendication 9, caractérisé en ce que la portion de travail (26) est ajustée sur ladite lampe (11) dans une condition de prétension élastique.

11. Dispositif de nettoyage selon la revendication 2, caractérisé en ce qu'il comporte deux barres de manoeuvre (29) situées à des endroits diamétralement opposés à partir de la lampe (11) et s'étendant parallèlement à cette dernière.

12. Dispositif de nettoyage selon la revendication 2, caractérisé en ce que ladite poignée de manoeuvre (31) est apte à être insérée dans un logement respectif (31a) présenté par l'enceinte de support (3) et portant ladite lampe (11).
